# EUROPÄISCHE PATENTSCHRIFT

(11) **EP 1 311 005 B1**
(45) Veröffentlichungstag und Bekanntmachung des Hinweises auf die Patenterteilung: **09.01.2008**
(21) Anmeldenummer: 02022846.6
(22) Anmeldetag: 14.10.2002
(51) Int. Cl.: H01L 41/04

(54) **Verfahren und Vorrichtung zum Laden und Entladen eines piezoelektrischen Elementes**
Method and apparatus for charging and discharging a piezoelectric element
Méthode et dispositif de chargement et déchargement d'un élément piézoélectrique

(30) Priorität: 10.11.2001 DE 10155390
(43) Veröffentlichungstag der Anmeldung: 14.05.2003
(73) Patentinhaber: ROBERT BOSCH GMBH, 70442 Stuttgart (DE)
(72) Erfinder: Rueger, Johannes-Joerg, 1130 Wien (AT)

(56) Entgegenhaltungen:
- WO-A-01/23743
- DE-A1- 19 845 042
- DE-A1- 19 931 238
- US-A- 5 869 918

## Beschreibung

Die Erfindung betrifft ein Verfahren gemäß dem Oberbegriff des Patentanspruchs 1 und eine Vorrichtung gemäß dem Oberbegriff des Patentanspruchs 6, das heißt ein Verfahren und eine Vorrichtung zum Laden oder Entladen eines piezoelektrischen Elementes, wobei elektrische Ladungsträger von einer Gleichspannungsquelle zum piezoelektrischen Element oder umgekehrt transportiert werden, um eine elastische Auslenkung des piezoelektrischen Elementes auf ein Stellglied zu übertragen.

### Stand der Technik

Aus der US-A-5 869 918 ist ein Verfahren zum Laden oder Entladen eines piezoelektrischen Elements beschrieben, bei dem elektrische Ladungsträger von einer Gleichspannungsquelle zum piezoelektrischen Element oder umgekehrt transportiert werden. Bei der einer ersten Ausführungsform werden unterschiedliche Stellbewegungen durch unterschiedliche Ansteuerspannungen realisiert. Bei einer zweiten Ausführungsform unterschiedliche Auslenkungen durch unterschiedliche Ansteuerdauern realisiert.

Auch die DE-A-19 931 238 beschreibt ein Verfahren und eine Vorrichtung zum Laden oder Entladen eines piezoelektrischen Elements. Dabei ist vorgesehen, dass unterschiedliche Ladezeiten für Vor- und Hauptseinspritzung gewählt werden.

Piezoelektrische Elemente haben bekanntermaßen die Eigenschaft, sich in Abhängigkeit von einer an sie angelegten oder einer sich an ihnen einstellenden Gleichspannung zusammenzuziehen oder auszudehnen. Die praktische Realisierung von Stellgliedern durch piezoelektrische Elemente ist insbesondere dann geeignet, wenn das betreffende Stellglied schnelle und/oder häufige Bewegungen auszuführen hat. Das piezoelektrische Element als Stellglied kommt unter anderem bei KraftstoffEinspritzdüsen für Brennkraftmaschinen zum Einsatz. Für bestimmte Anwendungsfälle ist es erforderlich, beispielsweise wenn das piezoelektrische Element als Aktor in einem Kraftstoff- Einspritzsystem verwendet wird, dass das piezoelektrische Element möglichst genau auf verschiedene, gegebenenfalls auch variierende Ausdehnungen gebracht werden kann. Dabei entsprechen verschiedene Ausdehnungen des Piezoelementes durch eine direkte oder indirekte Übertragung auf ein Steuerventil der Verlagerung eines Stellgliedes, wie beispielsweise einer Düsennadel. Die Verlagerung der Düsennadel hat die Freigabe von Einspritzlöchern zur Folge. Die Dauer der Freigabe der Einspritzlöcher entspricht in Abhängigkeit eines freien Querschnitts der Löcher und des anliegenden Druckes einer gewünschten Einspritzmenge. Auf den Hauptanwendungsfall, wobei das die Bewegung der Düsennadel steuernde Steuerventil nicht direkt, sondern über einen hydraulischen Koppler, vom piezoelektrischen Element ausgehend, angesteuert wird, wird im Folgenden näher eingegangen.

Das piezoelektrische Element bildet zusammen mit dem hydraulischen Koppler und dem anschließenden Steuerventil und der Düsennadel ein komplexes Feder-Masse-System. Das Feder-Masse-System darf durch die Ansteuerung nicht zu übermäßigen Schwingungen angeregt werden, da sich ansonsten Auswirkungen auf die gewünschte Einspritzmenge ergeben würden. Eine Schwingungsanregung des piezoelektrischen Elementes kann demzufolge nicht beliebig kurz sein.

Es wird unter der Voraussetzung eines vorbestimmten Spannungsniveaus eine untere Zeitschwelle erreicht, bei der eine Ansteuerdauer bestehend aus einem Ladevorgang und einem Haltevorgang nicht weiter verkürzt werden kann, ohne das Feder-Masse-System in Schwingung zu bringen.

Dies ist nachteilig für die gewünschte Ansteuerung zur Realisierung von Kleinstmengen bei Piezo-Systemen, insbesondere beim Einsatz in Kraftstoff-Einspritzsystemen. Ein an sich bekannter Betriebsmodus mit seinem Ansteuerzyklus ermöglicht die schwingungsfreie Auslenkung von piezoelektrischen Elementen über die Veränderung der Ansteuerdauer, jedoch bleibt als Grenze die untere Zeitschwelle bestehen. Insbesondere bei einer technischen Anforderung nach beliebig kleinen Einspritzmengen bei einem sehr hohen Rail-Druck in Kraftstoff-Einspritzsystemen ist eine schwingungsfreie Ansteuerung mit dem bekannten Verfahren nicht mehr möglich, worin ein wesentlicher Nachteil dieses ersten Betriebsmodus besteht.

### Vorteile der Erfindung

Das erfindungsgemäße Verfahren mit den im Anspruch 1 genannten Merkmalen bietet gegenüber dem bisherigen Verfahren den Vorteil, dass eine Stellbewegung des Stellgliedes in seiner Höhe verändert wird, indem der Piezo-Aktor auf eine veränderliche Spannung aufgeladen wird. Dabei wird darauf geachtet, dass die Lade- beziehungsweise Entladezeit des Aktors unverändert bleibt, um vorgenannte Schwingungen auch bei Variation der Ansteuerspannung sicher zu verhindern. Dieser neue zweite Betriebsmodus dient zur Realisierung von Kleinstmengen, insbesondere in Kraftstoff-Einspritzsystemen mit hohem Rail-Druck, da in einfacher Weise kleinste Stellbewegungen des Stellgliedes vorgenommen werden können, ohne das Feder- Masse-System in Schwingung zu bringen.

Die erfindungsgemäße Vorrichtung mit den im Anspruch 6 genannten Merkmalen bietet den Vorteil, dass ein Steuergerät vorgesehen ist, welches vor Beginn des Ansteuerzyklus des Piezoelementes auswählt, ob die Ansteuerung im ersten oder im zweiten Betriebsmodus erfolgt. Im erfindungsgemäßen Steuergerät werden alle Daten erfasst und parametrisiert, die notwendig sind, um eine geeignete Auswahl zwischen den Betriebsmodi zu treffen.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Fig. 1: ein Einspritzsystem mit einer direkten Ansteuerung eines Stellgliedes ;
- Figur 2: ein Einspritzsystem mit einer indirekten Ansteuerung des Stellgliedes;
- Figur 3: eine schematische Darstellung eines Einspritzsystems;
- Figur 4: ein Diagramm mit einer Darstellung des Ansteuerungszyklus im Grenzbereich einer unteren Zeitschwelle unter Bildung eines Spannungsniveaus U₁ und einer unveränderten Lade- bzw. Entladezeit (zweiter Betriebsmodus);
- Figur 5: ein Diagramm mit einer Darstellung eines Ansteuerungszyklus in Bereichen größer/gleich der unteren Zeitschwelle bei einem vorbestimmten konstanten Gleichspannungsniveau U₂ (erster Betriebsmodus) und
- Figur 6: eine Darstellung der Vorrichtung in einem Blockschema.

### Beschreibung des Ausführungsbeispiels

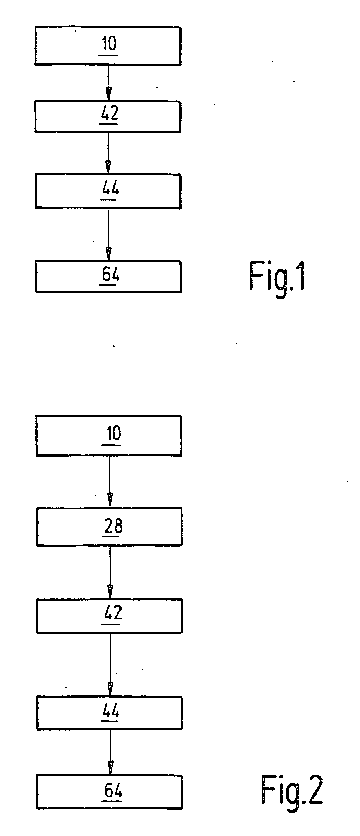

Zur Übertragung einer Auslenkung eines Piezoelementes 10 auf ein Stellglied 14 wird ein das Stellglied 14 bewegendes Steuerventil 42 verwandt. Diese direkte Übertragungsart ist in Figur 1 dargestellt. In Figur 2 wird die in der Regel in der Praxis verwandte Übertragungsart dargestellt, auf die im Weiteren näher eingegangen wird. Zur Übertragung der Auslenkung des Piezoelementes 10 auf das Steuerventil 42 wird ein hydraulischer Koppler 28 zwischengeschaltet. Es erfolgt anschließend die Übertragung der Stellbewegung des hydraulischen Kopplers 28 über das Steuerventil 42 auf das Stellglied 14. In beiden Übertragungsarten wird durch die Auslenkung des Stellgliedes 14 eine Düsennadel 44 bewegt, die Einspritzlöcher 64 für eine vorbestimmte Zeit freigibt.

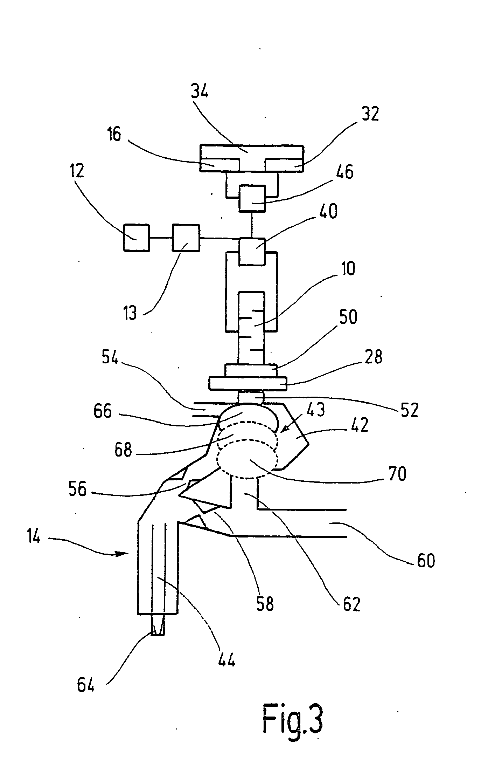

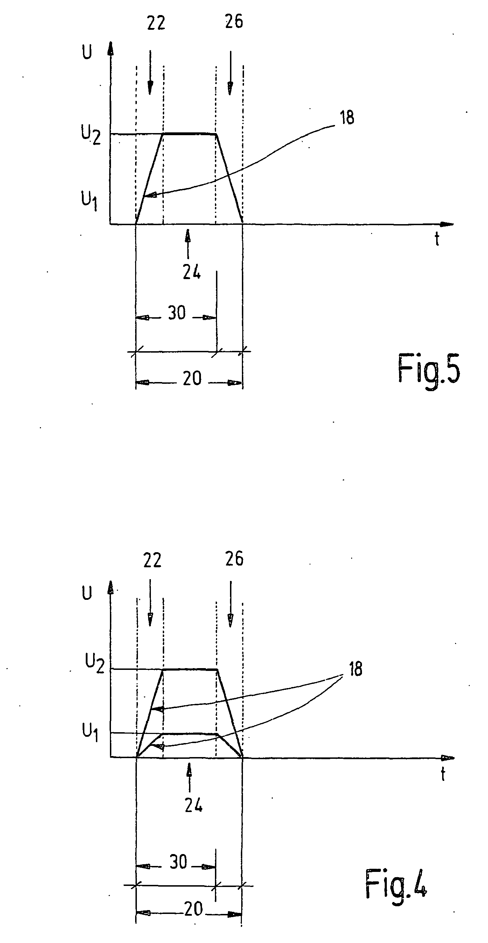

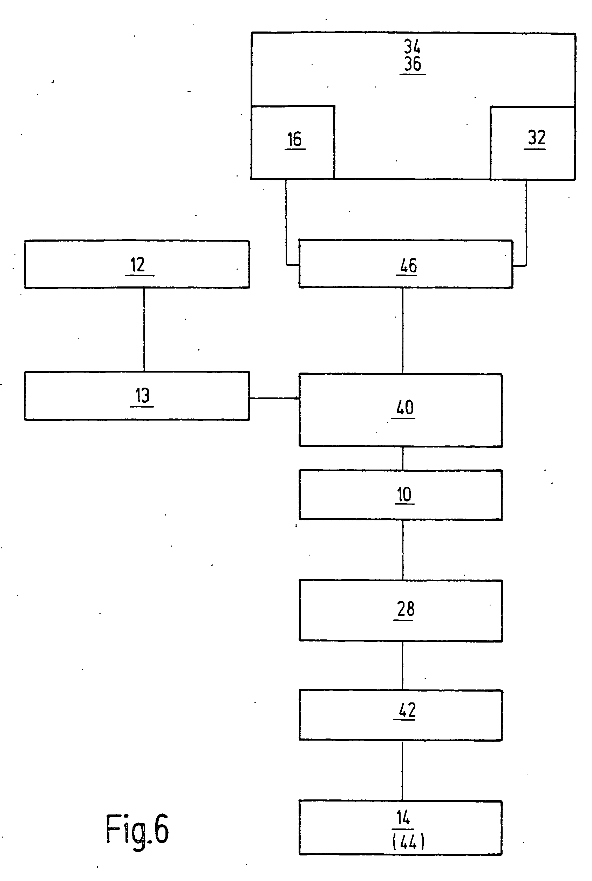

Figur 3 zeigt schematisch ein Einspritzsystem. Eine Versorgungsspannung 12 speist eine Gleichspannungsquelle 13, die eine Lade- und Entladeeinheit 40 versorgt. In einem Mikrokontroller 34 eines Steuergerätes 34 werden zur Steuerung und Regelung Daten von Kraftstoff-Einspritzsystemen parametrisiert, die zur Ansteuerung eines Ansteuerbausteins 46 dienen. Dabei werden zur Ansteuerung des Ansteuerbausteins 46 ein erster Betriebsmodus 16 und ein zweiter Betriebsmodus 32 gebildet, auf die später detailliert eingegangen wird. In beiden Betriebsmodi 16 oder 32 wird über den Ansteuerbaustein 46 die Lade- und Entladeeinheit 40 angesprochen. Es werden elektrische Ladungsträger der Gleichspannungsquelle 13 zum piezoelektrischen Element 10 und zurück übertragen. Die Übertragung erfolgt innerhalb eines Ansteuerzyklus 20 (Figuren 5 und 6), der aus einem Ladevorgang 22, einem Haltevorgang 24 und einem Entladevorgang 26 gebildet wird. Idealerweise wird der Ladevorgang 22 und der Entladevorgang 26 in beiden Betriebsmodi 16 und 32 in einer gleichen Zeitdauer realisiert. Beim Ladevorgang 22 und im Wesentlichen beim Haltevorgang 24 wird das piezoelektrische Element 10 mechanisch ausgelenkt. Die Auslenkung wird über einen Kolben 50 auf den hydraulischen Koppler 28 übertragen. Vom hydraulischen Koppler 28 erfolgt die Übertragung auf den Kolben 52 und nachfolgend auf das Steuerventil 42. In Abhängigkeit vom gewählten Betriebsmodus 16 oder 32 erfolgen erfindungsgemäß unterschiedliche Reaktionen des Steuerventiles 42 und daraus folgend des Stellgliedes 14, insbesondere der Düsennadel 44.

Bei der weiteren Erläuterung des Ausführungsbeispieles wird von einem konstanten Rail-Druck einer Rail-Kammer 60 ausgegangen. Grundlage der Erläuterung bilden weiterhin das piezoelektrische Element 10, der Kolben 50, der hydraulische Koppler 28 und der Kolben 52, die zusammen mit den bewegten diskreten Massen im Innern des Steuerventils bis hin zur Düsennadel 44 das komplexe Feder-Masse-System ausbilden.

Beide Betriebsmodi 16 und 32 verlaufen - wie zuvor beschrieben - nach dem Ansteuerzyklus 20 ab, anhand dessen die Betriebsmodi 16 und 32 nachfolgend beschrieben werden.

Im zweiten Betriebsmodus 16 vor der Ansteuerung des piezoelektrischen Elementes 10, gemäß Figur 3, liegt ein Ventilelement 43 in einem ersten Sitz 66 an und verschließt einen Rücklauf 54. Die Düsennadel 44 wird durch den anliegenden Druck der Rail-Kammer 60 in geschlossenem Zustand gehalten.

Gemäß Figur 4 erfolgt der Ladevorgang 22 des piezoelektrischen Elementes 10 mittels eines veränderbaren Spannungsgradienten 18 bis zu einem Spannungsniveau U₁. Es folgt der Haltevorgang 24 auf dem gleichen Spannungsniveau U₁.

Der Ladevorgang 22 und der Haltevorgang 24 werden unter Einhaltung einer unteren Zeitschwelle 30 realisiert. Die untere Zeitschwelle 30 ist die Summe der Zeiten aus Ladevorgang 22 und Haltevorgang 24, bei der das Feder-Masse-System gerade noch nicht ins Schwingen gerät.

Gemäß Figur 3 wird der hydraulische Koppler 28 ausgehend von der Auslenkung des piezoelektrischen Elementes 10 über die Kolben 50 und 52 mechanisch ausgelenkt.

Das Ventilelement 43 wird nach Auslenkung aus dem ersten Sitz 66 durch den Kolben 52 innerhalb des Steuerventils 42 in eine mittlere Position 68 zwischen Sitz 66 und Sitz 70 verlagert, ohne einen Rail-Bypass 62 zu verschließen. Der Rücklauf 54 wird gleichzeitig geöffnet. Es findet über eine Zulauf-Drossel 58, eine Ablauf-Drossel 56 und den Rail-Bypass 62 eine Druckentlastung über den Rücklauf 54 statt. Die Zulauf-Drossel 58 besitzt einen kleineren Querschnitt als die Ablauf-Drossel 56. Der Rail-Druck der Rail-Kammer 60 wirkt über den geöffneten Rail-Bypass 62 auf der Rückseite der Ablauf-Drossel 56 und über die Zulauf-Drossel 58 auf der Vorderseite der Ablauf-Drossel 56. Der Druck im Bereich der Düsennadel 44 fällt nur soweit ab, dass sich die Düsennadel 44 in einem Teilhub oder zumindest langsamer als bei stärker abgesenktem Druck öffnet und vorhandene. Einspritzlöcher 64 freigegeben werden.

Das Feder-Masse-System gerät nicht in Schwingungen, da - zur Realisierung eines Teilhubes - der Spannungsgradient 18 innerhalb des Ladevorganges 22 des Ansteuerzyklus 20 unter Beachtung der Nichtunterschreitung der unteren Zeitschwelle 30 verändert wurde.

Gemäß Figur 4 sinkt das Spannungsniveau U₁ beim Entladevorgang 26 wieder ab und die Auslenkung des piezoelektrischen Elementes 10 geht auf Null zurück.

Gemäß Figur 3 geben der hydraulische Koppler 28 und die Kolben 52 und 50, dem Rail-Druck der Rail-Kammer 60 über den Rail-Bypass 62 auf das Ventilelement 43 folgend, nach. Das Ventilelement 43 verschließt den Rücklauf 54 und wird in den ersten Sitz 66 zurückverlagert. Durch den wiederhergestellten Rail-Druck der Rail-Kammer 60 im Innern des Steuerventils 42 wird gleichzeitig die Düsennadel 44 wieder geschlossen.

Im an sich bekannten ersten Betriebsmodus 32 vor der Ansteuerung des piezoelektrischen Elementes 10, gemäß Figur 3, liegt das Ventilelement 43 im ersten Sitz an und verschließt den Rücklauf 54. Die Düsennadel 44 wird durch den anliegenden Druck der Rail-Kammer 60 in geschlossenem Zustand gehalten.

Gemäß Figur 5 erfolgt der Ladevorgang 22 des piezoelektrischen Elementes 10 bis zum vorbestimmten Spannungsniveau U₂. Es folgt der Haltevorgang 24 auf einem gleichen Spannungsniveau U₂.

Der Ladevorgang 22 und der Haltevorgang 24 werden unter Einhaltung der unteren Zeitschwelle 30 realisiert.

Gemäß Figur 3 wird der hydraulische Koppler 28 ausgehend von der Auslenkung des piezoelektrischen Elementes 10 über die Kolben 50 und 52 mechanisch ausgelenkt.

Das Ventilelement 43 wird nach Auslenkung aus dem ersten Sitz 66 durch den Kolben 52 innerhalb des Steuerventils 42 in den zweiten Sitz 70 verlagert, so dass der Rail-Bypass 62 verschlossen wird. Der Rücklauf 54 wird gleichzeitig geöffnet. Es findet über die Zulauf-Drossel 58 und die Ablauf-Drossel 56 eine Druckentlastung über den Rücklauf 54 statt. Die Zulauf-Drossel 58 mit ihrem kleineren Querschnitt als die Ablauf-Drossel 56 führt zu einer über die Drosselquerschnitte zeitlich vorgebbaren Druckabsenkung an der Düsennadel 44. Da der Rail-Druck der Rail-Kammer in diesem Betriebsmodus 32 nicht über den geöffneten Rail-Bypass 62 auf die Rückseite der Ablauf-Drossel 56 wirkt, fällt der Druck an der Düsennadel 44 soweit ab, dass sich die Düsennadel 44 in einem Vollhub öffnet und die Einspritzlöcher 64 vollständig freigegeben werden.

Das Feder-Masse-System gerät nicht in Schwingungen, da zur Realisierung des Vollhubes, gemäß Figur 5, der Ladevorgang 22 und der Haltevorgang 24 innerhalb des Ansteuerzyklus 20 bei einem vorbestimmten Spannungsniveau U₂ unter Beachtung der Nichtunterschreitung der unteren Zeitschwelle 30 durchgeführt wurde. Nachfolgend sinkt das Spannungsniveau U₂ beim Entladevorgang 26 wieder ab und die Auslenkung des piezoelektrischen Elementes 10 geht auf Null zurück.

Gemäß Figur 3 geben der hydraulische Koppler 28 und die Kolben 52 und 50, dem Rail-Druck der Rail-Kammer 60 über den Rail-Bypass 62 auf das Ventilelement 43 folgend, nach. Das Ventilelement 43 verlässt den zweiten Sitz 70 und verschließt den Rücklauf 54 und wird in den ersten Sitz 66 zurückverlagert. Durch den wiederhergestellten Rail-Druck der Rail-Kammer 60 im Innern des Steuerventiles 42 wird gleichzeitig die Düsennadel 44 wieder geschlossen.

Die in Figur 6 gezeigte und nachfolgend näher beschriebene Vorrichtung zum Laden oder Entladen eines piezoelektrischen Elementes 10 zeichnet sich dadurch aus, dass sie die Lade- und Entladeeinheit 40 besitzt. Der Lade- und Entladeeinheit 40 ist die Gleichspannungsquelle 13 zugeordnet, die zwischen der Versorgungsspannung 12 und der Lade- und Entladeeinheit 40 angeordnet ist. Die Gleichspannungsquelle 13 ist beispielsweise gemeinsam mit der Lade- und Entladeeinheit 40 und dem Mikrokontroller 34 Bestandteil des Steuergerätes.

In an sich bekannter Weise ist der Lade- und Entladeeinheit 40 ein piezoelektrisches Element 10 zugeordnet, welches mit einem hydraulischen Koppler 28 verbunden ist. Zwischen dem hydraulischen Koppler 28 und dem piezoelektrischen Element 10 befinden sich eingangsseitig des hydraulischen Kopplers 28 der Kolben 50 und ausgangsseitig des hydraulischen Kopplers 28 der Kolben 52 (Figur 3). Dem ausgangsseitigen Kolben 52 des hydraulischen Kopplers 28 ist ein Steuerventil 42 zugeordnet. Das Steuerventil 42 weist ein Stellglied 14 auf, welches insbesondere eine Düsennadel 44 ist. Die bis dahin beschriebene Vorrichtung wird durch den Mikrokontroller 34 und einen Ansteuerbaustein 46 ergänzt und ist direkt der Lade- und Entladeeinheit 40 zugeordnet. Der Mikrokontroller 34 weist eine Steuerung 36 auf, mittels der im zweiten Betriebsmodus eine Stellbewegung des Stellgliedes 14 durch Variation der angelegten Ansteuerspannung veränderbar ist, wobei gleichzeitig auch der Spannungsgradient verändert wird. Der Mikrokontroller 34 weist zudem in der Steuerung 36 den ersten Betriebsmodus auf, mittels dem eine Stellbewegung des Stellgliedes 14 in Abhängigkeit von einem zeitlichen Haltevorgang 24 bestimmt ist. Die im Mikrokontroller 34 angeordneten Betriebsmodi 16 und 32 werden in Abhängigkeit von den erfassten und parametrisierten Daten des Mikrokontrollers 34 ausgewählt. Dadurch ist bestimmbar, welcher Betriebsmodus 16 oder 32 dem Ansteuerbaustein 46 nachfolgend zugeordnet ist. Der Mikrokontroller 34 und die Steuerung 36 zeichnen sich dadurch aus, dass die Betriebsmodi 16 oder 32 in ihrer Reihenfolge frei kombinierbar sind und über den Ansteuerbaustein 46 auf die Lade- und Entladeeinheit 40 übertragbar sind.

## Patentansprüche

1. Verfahren zum Laden oder Entladen eines piezoelektrischen Elementes (10), wobei elektrische Ladungsträger von einer Gleichspannungsquelle (13) zum piezoelektrischen Element (10) oder umgekehrt transportiert werden, um eine elastische Auslenkung des piezoelektrischen Elementes (10) auf ein Stellglied (14) zu übertragen, wobei
in einem ersten Betriebsmodus eine Stellbewegung des Stellgliedes (14) durch Variation der Ansteuerdauer verändert wird und
(in einem zweiten Betriebsmodus eine Stellbewegung des Stellgliedes (14) durch Variation der angelegten Ansteuerspannung verändert wird, **dadurch gekennzeichnet, dass** im zweiten Betriebsmodus ein Spannungsgradient (18) an die Ansteuerspannung derart angepasst wird, dass die Ladezeit beziehungsweise die Entladezeit im ersten und zweiten Modus gleich lang sind.

2. Verfahren Anspruch 1, **dadurch gekennzeichnet, dass** die elastische Auslenkung des piezoelektrischen Elementes (10) direkt auf das Stellglied (14) übertragen wird.

3. Verfahren nach Anspruch 1, **dadurch gekennzeichnet, dass** die elastische Auslenkung des piezoelektrischen Elementes (10) über einen hydraulischen Koppler (28) indirekt auf das Stellglied (14) übertragen wird.

4. Verfahren nach einem der vorhergehenden Ansprüche, **dadurch gekennzeichnet, dass** in einem ersten Betriebsmodus (16) eine kleinere Stellbewegung auf das Stellglied (14) als die kleinste Stellbewegung innerhalb des zweiten Betriebsmodus (32) übertragen wird.

5. Verfahren nach einem der vorhergehenden Ansprüche, **dadurch gekennzeichnet, dass** die Betriebsmodi (16, 32) beliebig in ihrer Reihenfolge kombinierbar sind.

6. Vorrichtung zum Laden oder Entladen eines piezoelektrischen Elementes (10) mit einer von einem Steuergerät anzusteuernden Versorgungsspannung (12) einer Gleichspannungsquelle (13), mit einer Steuerschaltung (36), mittels der in einem ersten Betriebsmodus eine Stellbewegung des Stellgliedes (14) durch Variation der Ansteuerdauer verändert wird und mittels der in einem zweiten Betriebsmodus eine Stellbewegung des Stellgliedes (14) durch Variation der angelegten Ansteuerspannung verändert wird, **dadurch gekennzeichnet, dass** im zweiten Betriebsmodus ein Spannungsgradient (18) an die Ansteuerspannung derart angepasst wird, dass die Ladezeit beziehungsweise die Entladezeit im ersten und zweiten Modus gleich lang sind.

7. Vorrichtung nach einem der vorhergehenden Ansprüche, **dadurch gekennzeichnet, dass** die Steuerschaltung (36) in dem Steuergerät angeordnet ist.

8. Vorrichtung nach einem der vorhergehenden Ansprüche, **dadurch gekennzeichnet, dass** dem Steuergerät ein Ansteuerbaustein (46) zugeordnet ist.

9. Vorrichtung nach einem der vorhergehenden Ansprüche, **dadurch gekennzeichnet, dass** das piezoelektrische Element (10) mit einem hydraulischen Koppler (28) verbunden ist.

10. Vorrichtung nach einem der vorhergehenden Ansprüche, **dadurch gekennzeichnet, dass** dem hydraulischen Koppler (28) ein Steuerventil (42) zugeordnet ist.

11. Vorrichtung nach einem der vorhergehenden Ansprüche, **dadurch gekennzeichnet, dass** dem Steuerventil (42) ein Stellglied (14) zugeordnet ist.

12. Vorrichtung nach Anspruch 11, **dadurch gekennzeichnet, dass** das Stellglied (14) eine Düsennadel (44) ist.

## Claims

1. Method for charging or discharging a piezoelectric element (10), with electrical charge carriers being transported from a DC voltage source (13) to the piezoelectric element (10) or vice versa in order to transmit an elastic deflection of the piezoelectric element (10) to an actuator (14), with an actuating movement of the actuator (14) being varied by varying the actuation period in a first operating mode, and an actuating movement of the actuator (14) being varied by varying the applied actuation voltage in a second operating mode, **characterized in that** a voltage gradient (18) is matched to the actuation voltage in the second operating mode in such a way that the charging time and the discharging time are of equal length in the first and second mode.

2. Method according to Claim 1, **characterized in that** the elastic deflection of the piezoelectric element (10) is transmitted directly to the actuator (14).

3. Method according to Claim 1, **characterized in that** the elastic deflection of the piezoelectric element (10) is transmitted indirectly to the actuator (14) via a hydraulic coupler (28).

4. Method according to one of the preceding claims, **characterized in that** a smaller actuating movement than the smallest actuating movement within the second operating mode (32) is transmitted to the actuator (14) in a first operating mode (16).

5. Method according to one of the preceding claims, **characterized in that** the operating modes (16, 32) can be combined in any desired order.

6. Apparatus for charging or discharging a piezoelectric element (10) having a supply voltage (12) of a DC voltage source (13), which supply voltage can be controlled by a control device, comprising a control circuit (36) by means of which an actuating movement of the actuator (14) is varied by varying the actuation period in a first operating mode, and by means of which an actuating movement of the actuator (14) is varied by varying the applied actuation voltage in a second operating mode, **characterized in that** a voltage gradient (18) is matched to the actuation voltage in the second operating mode in such a way that the charging time and the discharging time are of equal length in the first and second mode.

7. Apparatus according to one of the preceding claims, **characterized in that** the control circuit (36) is arranged in the control device.

8. Apparatus according to one of the preceding claims, **characterized in that** the control device has an associated actuation module (46).

9. Apparatus according to one of the preceding claims, **characterized in that** the piezoelectric element (10) is connected to a hydraulic coupler (28).

10. Apparatus according to one of the preceding claims, **characterized in that** the hydraulic coupler (28) has an associated control valve (42).

11. Apparatus according to one of the preceding claims, **characterized in that** the control valve (42) has an associated actuator (14).

12. Apparatus according to Claim 11, **characterized in that** the actuator (14) is a nozzle needle (44).

## Revendications

1. Procédé de charge ou de décharge d'un élément piézoélectrique (10) selon lequel
on transporte des supports de charge électrique d'une source de tension continue (13) vers un élément piézoélectrique (10) ou inversement, pour transmettre un débattement élastique de l'élément piézoélectrique (10) à un organe d'actionnement (14), et
dans un premier mode de fonctionnement, on modifie le mouvement d'actionnement de l'organe d'actionnement (14) par variation de la durée de commande et
dans un second mode de fonctionnement, on modifie le mouvement d'actionnement de l'élément d'actionnement (14) par variation de la tension de commande appliquée,
**caractérisé en ce que**
dans le second mode de fonctionnement, on adapte un gradient de tension (18) à la tension de commande pour que les temps de charge ou les temps de décharge du premier et du second mode soient de même durée.

2. Procédé selon la revendication 1,
**caractérisé en ce qu'**
on transmet le débattement élastique de l'élément piézoélectrique (10) directement à l'élément d'actionnement (14).

3. Procédé selon la revendication 1,
**caractérisé en ce qu'**
on transmet le débattement élastique de l'élément piézoélectrique (10) par un coupleur hydraulique (28) indirectement à l'élément d'actionnement (14).

4. Procédé selon l'une des revendications précédentes,
**caractérisé en ce que**
dans un premier mode de fonctionnement (14) on transmet un petit mouvement d'actionnement à l'organe d'actionnement (14) comme mouvement d'actionnement le plus petit, au cours du second mode de fonctionnement (32).

5. Procédé selon l'une des revendications précédentes,
**caractérisé en ce que**
les modes de fonctionnement (16, 32) peuvent être combinés dans un ordre quelconque.

6. Dispositif de charge ou de décharge d'un élément piézo-électrique (10) à l'aide d'une tension d'alimentation (12) d'une source de tension continue (13), tension commandée par un appareil de commande, comportant un circuit de commande (16) à l'aide duquel dans un premier mode de fonctionnement on modifie le mouvement d'actionnement de l'organe d'actionnement (14) en faisant varier la durée de commande et à l'aide de celle-ci, dans un second mode de fonctionnement, on modifie le mouvement d'actionnement de l'organe d'actionnement (14) par variation de la tension de commande appliquée,
**caractérisé en ce que**
dans un second mode de fonctionnement, on adapte un gradient de tension (18) à la tension de commande pour que les temps de charge ou les temps de décharge du premier et du second mode soient de même durée.

7. Dispositif selon la revendication précédente,
**caractérisé en ce que**
le circuit de commande (36) est prévu dans l'appareil de commande.

8. Dispositif selon l'une des revendications précédentes,
**caractérisé en ce que**
l'appareil de commande comporté un composant de commande (46).

9. Dispositif selon l'une des revendications précédentes,
**caractérisé en ce que**
l'élément piézoélectrique (10) est relié à un coupleur hydraulique (28).

10. Dispositif selon l'une des revendications précédentes,
**caractérisé en ce qu'**
une vanne de commande (42) est associée au coupleur hydraulique (28).

11. Dispositif selon l'une des revendications précédentes,
**caractérisé en ce qu'**
un organe d'actionnement (14) est associé à la soupape de commande (42).

12. Dispositif selon la revendication 11,
**caractérisé en ce que**
l'organe d'actionnement (14) est une aiguille de buse (44).
